# EUROPEAN PATENT SPECIFICATION

(11) **EP 2 557 893 B1**
(45) Date of publication and mention of the grant of the patent: **29.10.2014**
(21) Application number: 11177447.7
(22) Date of filing: 12.08.2011
(51) Int. Cl.: H04W 88/06, H04N 7/173, H04W 4/06, H04L 29/06

(54) **Apparatuses and methods for providing media in a radio communication system**
Vorrichtungen und Verfahren zur Bereitstellung von Medien in einem Funkkommunikationssystem
Appareils et procédés pour la fourniture d'un support dans un système de communication radio

(43) Date of publication of application: 13.02.2013
(73) Proprietor: BlackBerry Limited, Waterloo, ON N2K 0A7 (CA)
(72) Inventor: Hymel, James Allen, Waterloo, Ontario N2L 3W8 (CA)
(74) Representative: Bryn-Jacobsen, Caelia

(56) References cited:
- US-A1- 2004 205 822
- US-A1- 2009 183 199
- US-A1- 2010 088 734
- US-A1- 2011 055 886

## Description

The present disclosure relates generally to a manner by which to provide media to a wireless device. More particularly, the present disclosure relates to an apparatus, and an associated method, by which to broadcast, i.e., "side load", a first portion of the media to the wireless device and to make available the remaining portion of the media for delivery to the wireless device by way of a packet-switched channel of a radio carrier network. The broadcast portion, i.e., the side loaded portion, is stored at the wireless device and made available for subsequent play out.

A carrier is able to reduce system bandwidth requirements by side loading the first portion of the media using a broadcast technique and providing for downloading of the remaining portion, if play out of the remaining portion of the media is desired.

### Background

Mobile and other radio communication systems are widely used in modern society. As advancements in technology permit radio communication systems to be utilized to carry out additional communication, and other, services, the use of such radio communication systems pursuant to the additional services and functions is likely to increase.

Cellular communication systems are exemplary of mobile communication systems in which advancements in technology have been implemented to provide for additional services and functionalities. For instance, early-generation, cellular communication systems provided for voice communication services and only limited data communication services. New-generation, cellular communication systems, in contrast, provide not only for voice communication services but also data-intensive, data communication services in which significant amounts of data are processed and communicated. Additional radio communication systems, such as wireless local area networks (WLANs) and WiFi networks, have also been developed and deployed and are sometimes constructed to provide communication services analogous to the communication services provided by cellular communication systems. Interworking between different systems is sometimes also provided.

Increased usage of radio communication systems pursuant to the additional communication services, particularly when the communication services are data-intensive, increases bandwidth usage of the bandwidth allocated to the communication systems.

Some radio communication systems, for instance, provide for multimedia, e.g., video, services. A video service is bandwidth-consumptive, and the bandwidth capacities of the communication systems might limit access to the communication system as a result of lack of communication capacity. For instance, video traffic is estimated presently to consume close to forty percent of carrier data channels. While manners exist by which to compress video data, compression is generally limited to providing only moderate bandwidth savings.

U.S. Patent Application Publication No. 2010/088734 A1 by Yoshiharu Dewa et al., 8 April, 2010 is directed to the receiving data of a broadcast program and receiving data of a program delivered by Video on Demand (VOD). U.S. Patent Application Publication No. 2004/205822 A1 by Craig Ullman et al., 14 October 2004 is directed to allowing consumers to receive more information in a more efficient manner than either television or Internet alone. A URL is transmitted with the broadcast program and used to access locations on the Internet where additional information can be found.

The present invention is set out in the independent claims, with some optional features set out in the claims dependent thereto.

Various challenges relating to video and other media data-intensive communication services therefore remain.

### Brief Description of the Drawings

Figure 1 illustrates a functional block diagram of a radio communication system in which an implementation of the present disclosure is embodied.
Figure 2 illustrates a functional block diagram of a portion of the communication system shown in Figure 1.
Figure 3 illustrates a functional block diagram of another portion of the communication system illustrated in Figure 1.
Figure 4 illustrates a process diagram representative of the process of operation of an implementation of the present disclosure.
Figure 5 illustrates a process diagram, also representative of the process of operation of an implementation of the present disclosure.

### Detailed Description

The present disclosure provides an apparatus, and an associated method, by which to provide media for play out at a wireless device.

Through operation of an implementation of the present disclosure, a manner is provided by which to broadcast a first portion of the media and to make available the remaining portion of the media for delivery to the mobile device by way of a packet-switched channel of a radio carrier network.

In one aspect of the present disclosure, the portion of the media that is broadcast, i.e., side loaded, is delivered to a wireless device and stored at the wireless device for subsequent play out.

Reduced, carrier-network bandwidth resources result due to the broadcasting of the portion of the media.

In another aspect of the present disclosure, the media comprises video media or multimedia, and the broadcast of the media is made by way of a mobile ATSC TV (Advanced Television Systems Committee Television) broadcast technique. Alternately, the broadcast is by way of another broadcast technique or scheme.

In another aspect of the present disclosure, less than all of a media file is selected for broadcast. Only a portion of the media file is broadcast. For instance, if the entire media file is of a time length of five minutes, the first minute of the entire media file is broadcast.

In another aspect of the present disclosure, media considered to be both likely to be viewed with, i.e., exhibit a high level of the viewing popularity, is identified. Identification is made, for instance, by monitoring internet statistics related to video popularity, such as the popularity of so-called viral videos. Identifcation of popular media is a function of region, specific population group, or any other selected grouping or area.

The identified media, or a subset thereof, is selected, and a portion of the selected media is broadcast. In another aspect of the present disclosure, media portions that are broadcast are delivered to wireless devices, such as wireless devices that are in the region of interest or that are associated with users who are members of specific populations of interest. When delivered to the wireless devices, the media is cached, or otherwise stored, and made available for subsequent play out.

In another aspect of the present disclosure, prior to broadcast of a portion of the media, the media is tagged with, or otherwise identified to be associated with, a network location at which the media is accessible. The tag comprises, for instance, a URL (Uniform Resource Locator) or other identifier that identifies a location at which the media is accessible.

In another aspect of the present disclosure, the portion of the media cached or otherwise stored at a wireless device is accessed, when desired, for play out, such as at a display screen of the wireless device. The retrieved portion of the media is played out, unless the viewer elects to terminate the play out. If the viewer elects to terminate the play out, the play out ends. Otherwise, absent an election to terminate the play out or, alternately, election to continue play out of the media causes automatic or semi-automatic requests to be generated for access to an additional portion of the media. The request for access to the additional portion is routed to the URL, or other identified location tagged in the broadcast portion of the media. The request comprises, for instance, a packet-channel request, communicated upon a packet channel upon a radio air interface and, when delivered to a network, routed through the network for delivery to a destination associated with the URL or other location identification. In another aspect of the present disclosure, responsive to the request for the additional portion of the media, the additional media portion is accessed and sent to the wireless device that requested the additional media portion. The additional media portion is sent by way of a packet switched, or other, channel of the radio carrier network.

In another aspect of the present disclosure, the broadcast of the media portions is carried out at selected times, for instance, specific times or at predictable time intervals. Wireless devices to which a media portion is broadcast are thereby better able to conserve battery consumption for the reason that the wireless device needs only to be powered during the times during which a media portion is broadcast.

Potentially significant bandwidth savings are possible for the reason that many viewers of media content, particularly viral videos, view only a portion of the video and elect not to view the entire video. Broadcast of the videos to the wireless devices reduces the carrier bandwidth requirements with respect to the broadcast portion of the video. Through proper selection of the portion of the length of the portion of media that is broadcast, the number of viewers electing to view an additional portion of the media can be minimized.

Side loading part of the media by way of a mobile broadcast and playing the rest of the media, by way of a packet-switched connection reduces the radio carrier communication requirements.

In these and other aspects, therefore, an apparatus, and an associated method, is provided for a wireless device having media-broadcast reception functionality. A selection detector is configured to detect selection to play out selected media. A media retriever is adapted to receive indication of selection detected by the selection detector. The media retriever is configured to retrieve a locally-cached portion of the selected media and configured to initiate retrieval of a remotely-located additional portion of the selected media.

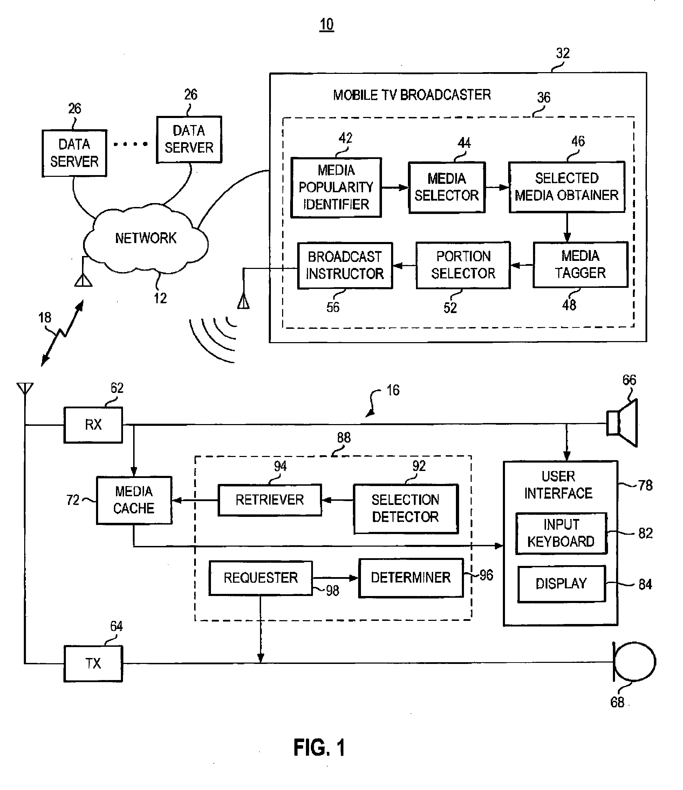

Figure 1 illustrates a radio communication system 10 having a communication network 12 that provides for communications with communication devices of which the wireless device 16 is representative. Communications between the network 12 and wireless device are made up on communication paths including radio channels 18 defined upon a radio air interface extending between the network and the wireless device.

The network 12 is representative of any various networks, operable pursuant to operating protocols and standards of a communication-system standard. In the exemplary implementation, the communication system 10 operates in general conformity with a cellular communication system standard, such as a 3GPP (Third Generation Partnership Project), 3GPP2 (Third Generation Partnership Project 2), GSM (Global System for Mobile Communications), CDMA (Code Division Multiple Access), Wireless Ethernet (Institute of Electrical and Electronic Engineers Standard 802.11), Wi-Fi, or other analogous communication scheme or standard.

The communication entities are placed in communication connectivity with the network 12 or form portions thereof. Here, a plurality of data servers 26 are placed in communication connectivity with the network. The data servers form data sources of media, such as videos including the aforementioned viral videos. The media stored at the data server 26 is accessible in conventional manner, e.g., by packet-based requests communicated by way of the network 12. And, the media is provided by way of packet-based communications, also by way of the network 12.

A mobile TV broadcaster 32 is also placed in communication connectivity with the network 12. The mobile TV broadcaster provides for broadcast of ATSC TV (Advanced Television Systems Committee Television). In one ATSC TV deployment, up to 1 mbps of bandwidth is made available for mobile-communication applications permitting up to fifty mobile television channels to be made available in areas in which the ATSC TV is deployed.

The broadcaster 32 forms an entity that includes the functionality of an apparatus 36 of an implementation of the present disclosure. The apparatus 36 provides for broadcast of portions of selected media for delivery to communication devices such as the wireless device 16.

The apparatus 36 is functionally represented and is implemented in any desired manner. For instance, functions provided by the elements of the apparatus are implemented by hardware elements, firmware elements, program code executable by processing circuitry, and combinations thereof. When an element is implemented as program code executable by processing circuitry, the apparatus 36 forms, or includes, a processor that invokes execution of software modules or other program code to carry out the functions of the associated element.

The apparatus 36 here includes a media popularity identifier 42, a media selector 44, a selected media of obtainer 46, a media tagger 48, a portion selector 52, and a broadcast instructor 56.

The media popularity identifier functions to identify media that is most popular, such as by monitoring internet statistics relating to most-requested media such as most-requested viral videos. The identification is made of popular media within a particular region or amongst particular population groupings or combinations thereof. In one implementation, the identification is made of a selected number, e.g., the ten most popular media items. In another implementation, identification is made of all media items that need popularity thresholds, such as aggregated requests or viewing thresholds.

Media-popularity monitoring is performed, in the exemplarily implementation, in real-time, such as at selected, intervals, such as hourly intervals. As popularity of viral video, and other media, sometimes changes quickly, the frequency with which monitoring operations are carried out are correspondingly adjusted, if needed.

Once identified, indications of identifications of the popular media are provided to the media selector 44. The media select or functions to select, from the identified media, which media to broadcast. Any or all of the identified media items are selectable by the media selector. The media selector, in one implementation, makes selection based upon additional criteria, such as content criteria of the identified media. In this manner, the media selector functions as a filter so that selection is made of media that exhibits selected criteria in addition to popularity criteria.

Indications of selections made by the media selector are provided to the selected media obtainer 46. The media obtainer functions to obtain the selected media. In an exemplary implementation, the media is identified by a URL (Uniform Resource Locator) or the equivalent, the selected media is obtained by accessing the identified locations at which the selected media is stored or otherwise accessed. In one implementation, the media is obtained by sending a request for the media and receiving the media in response to the request.

The selected media is tagged by the media tagger 48 with an indication of the location of which the associated media is stored or is otherwise accessible. The identification comprises, for instance, the URL of the location at which the media is accessible. The identification is contained, e.g., in metadata associated with the media. The portion selected selector selects a portion of the selected media to be broadcast. While any portion of the media is selectable, in the exemplary implementation, a first portion comprises an initial portion of the selected media. A portion, of a specific time length or of a specific percentage of the media, is selected for broadcast. For instance, a one-minute segment of media of a five-minute length is selected. When multiple media items are selected for broadcast, the selected lengths are selected for each individual media item or common lengths are selected for all of, or a group of, the media items. A record is also made of the locations of the selected media defining the selected portion thereof. For instance, if the selected portion of the media comprises the first minute of the media, a record is made that the selected portion terminates at a time location corresponding to the one-minute mark of the media.

The selected portion of the selected media is provided to the broadcast instructor 56. The broadcast instructor 56 functions to instruct, i.e., cause initiation of, broadcast of the selected media portion to all of the devices 16 within a particular region or associated with a particular population group. The broadcast is of a mobile ATSC TV-type, conforming to an appropriate ATSC TV operating-standard protocol. In the exemplary implementation, the media is broadcast in a real-time streaming fashion, e.g., analogous to regular, over-the-air television, or in a compressed and digitized manner.

The broadcasts are detected by devices 16 that are positioned within broadcast range of the broadcaster.

The device 16 includes radio transceiver circuitry, here represented by a receiver 62 and a transmitter 64. The receiver 62 and transmitter 64 are each implemented with multiple stages or parts including, e.g., baseband, intermediate frequency, and radio frequency stages or parts. A speaker 66 or other transducer is coupled to the receiver 62, and a microphone 68 or other transducer is coupled to the transmitter 64. The receiver and transmitter 62 and 64 provide for conventional, transceiving operations of voice and data with the network 12 by way of the radio channel 18. The receiver 62 is also representative of receiver functionality capable of receiving broadcast of the broadcaster 32.

When media portions are broadcast by the broadcaster 32, the broadcast media portion is detected by the receiver 62, and the media portion is stored at a media cache 72. The media portion stored at the media cache is available for subsequent access at the device 16. When multiple, media portions are broadcast and detected by the receiver 62, multiple media portions are stored at the media cache.

The wireless device 16 includes a user interface 78, which includes an input keyboard 82 and a display element 84. The input keyboard forms an input actuator implementable in any of various manners, including physical actuators or touch-screen input elements defined by a touch screen display. A user of the device 16 selects play out of a selected media portion stored at the media cache 72 by way of appropriate input entry at the user interface. The user of the device is made aware of the media in any of various, conventional manners, such as by word of mouth, delivery of a length to the location at which the media is accessible, such as an email including the URL of the location of the media, identification of the URL responsive to a user-initiated inquiry, such as an internet search, et cetera. A user can also be made aware of the availability of the media by revealing the contents of the media cache or being alerted to the content thereof.

The apparatus 88 includes a selection detector 92, a retriever 94, a determiner 96, and a requester 98.

The selection detector 92 detects selection by a user of the device 16 to view selected media. Selection is entered by way of the user interface 78, and the entry is detected by the detector 92. Indications of the detected selection are provided to the retriever 94. The retriever 94 accesses the media cache 72 and searches for the selected media. If the selected media is cached at the media cache, the retriever causes retrieval of the media portion for play out at the display element 84 of the user interface. In conventional manner, as the media is played out, the user, i.e., the viewer, of the media is able to terminate the play out at any time if the user elects not to continue viewing the media.

A determiner 96 determines whether a user wants to view more than the selected portion of the media, i.e., more than the stored media portion of the selected media. Determination is made, for instance, responsive to absence of detection of termination by the user of play out of the media portion that is played out at the display element 84. In one implementation, the user also is able to enter and input command requesting play out of more than the stored portion of the media. Responsive to a determination that the more than the stored, media portion is to be played out, an indication is provided to the requester 98, and the requester causes generation of a request for an additional portion, such as the rest of, the media. The determiner further determines the location at which the additional media is located or accessible, and the determined information is provided to the requester so that the requester is able to generate the request. As the broadcast media portion includes the tag that identifies the locations which the media is located or accessible, the determiner determines the location trough appropriate access to the information stored at the media cache.

Responsive to the request, the additional portion of the media is provided to the wireless device by way of a packet-channel connection, i.e., a point-to-point connection.

In one implementation, the broadcaster 32 first copies the selected media, splits the media parts, and is aware precisely where the media is to resume if played for longer than the length of the broadcast portion.

Because first portions of selected media, i.e., the portions most likely to be viewed by users of wireless devices, are broadcast, the wireless devices are provided with the media portions in a bandwidth-efficient manner. Viewers of the broadcast portion of the media who want to view the rest of the media, or at least an additional portion of the media, are able to do so by downloading the additional media by way of a packet-channel.

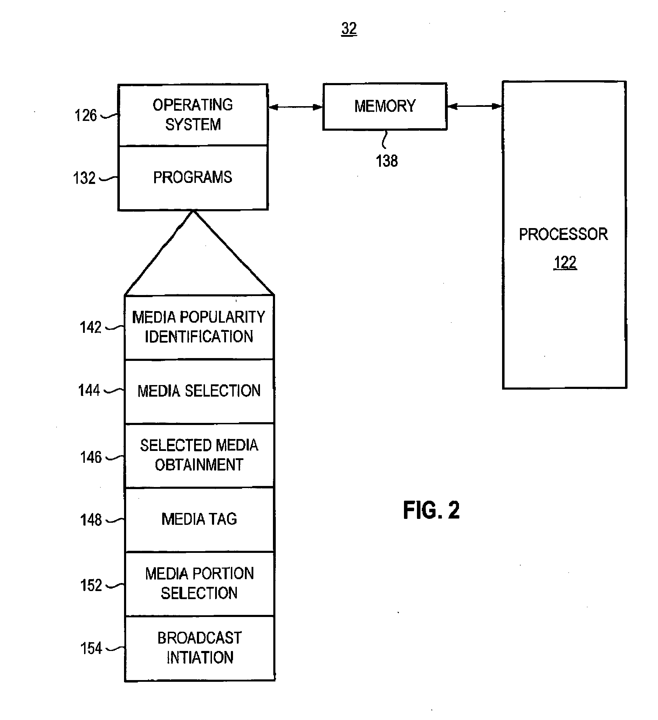

Figure 2 illustrates a portion of the mobile TV broadcaster 32 of an implementation of the present disclosure. In the implementation shown in Figure 2, the broadcaster 32 includes a processor 122. The processor 122 interacts with components and is provided input values, data, and other information including, directly or indirectly, acted upon pursuant to an implementation of the present disclosure.

An operating system 126 and software programs 132 are executed by the processor during operation of an implementation of the present disclosure. The operating system and software programs are stored, e.g., at a memory such as the memory 138.

The software programs include software modules, here including a media popularity identifier module 142, a media selector module 144, a selected media obtainer module 146, a media tagger module 148, a media portion selector module 152, and a broadcast initiator module 154. The modules 142-154 are used to facilitate the sending of selected media to communication devices, such as the wireless device 16 shown in Figure 1. The implementation of the broadcaster 32 shown in Figure 2 is merely exemplary. In other implementations, the functionality is carried out in other manners.

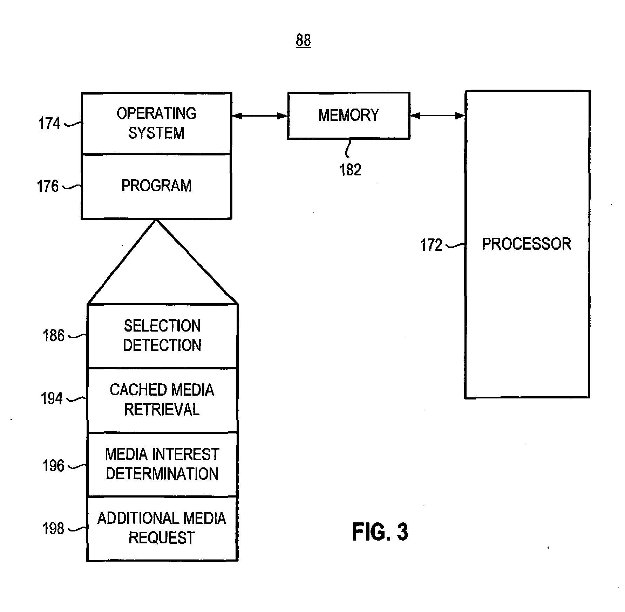

Figure 3 illustrates a portion of the apparatus 88 of an implementation of the present disclosure. The apparatus facilitates play out of media at a communication device, such as the wireless device 16, shown in Figure 1.

The apparatus includes a processor 172 that controls the overall operation of the functions provided by the apparatus 88. In one implementation, the processor 172 further controls overall operation of the communication device at which the apparatus 88 is implemented. The processor 172 also interacts with additional components, is provided with additional data and information during operation of the apparatus.

The apparatus 88 includes an operating system 174 and software programs 176 formed of program code that define algorithms. The operating system 174 and software programs 176 are stored at a memory element, such as the memory 182. The software programs 176 include software modules, here including a selection detection module 186, a cached-media retriever module 194, an additional media interest determination module 196, and an additional media request module 198. The modules 186-198 are used to facilitate play out of media at the communication device at which the apparatus 88 is implemented. Each of the software modules calls upon various hardware and software resources of the apparatus 88 and of the communication device at which the apparatus is implemented in order to execute the functionality of the respective modules. The implementation shown in Figure 3 is merely exemplary. In other implementations, the functions performed by the apparatus are carried out in other manners.

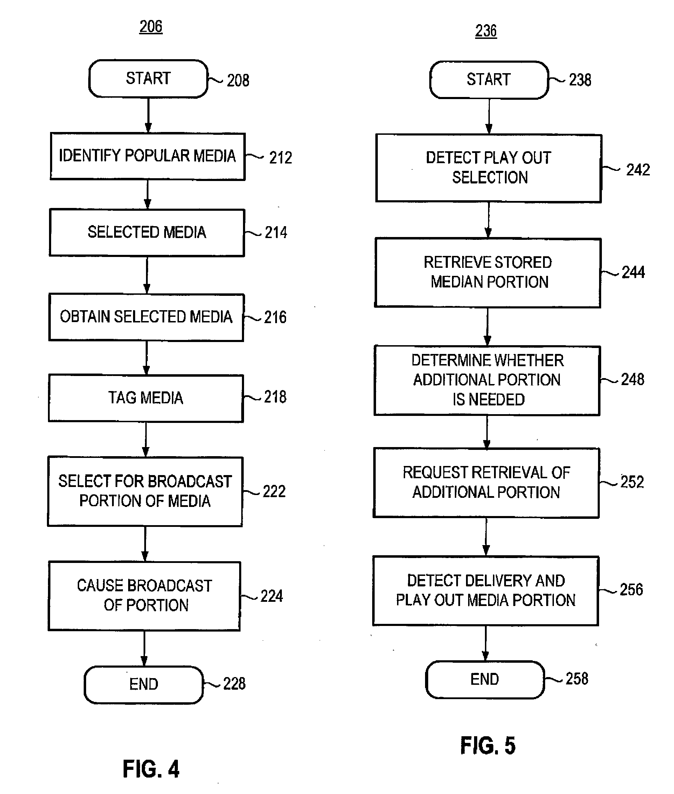

Figure 4 illustrates a process 206 representative of the process of operation of an implementation of the present disclosure. The process 206 facilitates sending of media to a communication device to facilitate play out of the media at the communication device.

The process commences at the start block 208 and includes process operations carried out a network entity, such as the apparatus 36 of the broadcaster 32 of the communication system shown in Figure 1. Monitoring is performed to identify, as indicated by the block 212, popular media, such as viral videos that are popular at a particular time. Then, and as indicated by the block 214, selection is made of media that exhibits selected popularity, or other appropriate, selection criteria, levels. Once selected, the selected media is obtained, indicated by the block 216. The media is tagged, indicated by the block 218, and a portion of the selected media is selected for broadcast, indicated by the block 222. Then, and as indicated by the block 224, the selected portion of the selected media is caused to be broadcast. The process ends at the block 228.

Figure 5 illustrates a process 236 representative of the process of operation of an implementation of the present disclosure. The process 236 facilitates play out of media at a communication device, such as the wireless device 16, shown in Figure 1.

The process commences at the start block 238. Detection is made, indicated by the block 242 of selection to play out selected media. The selection is entered, for instance, by a user of a communication device by way of a user interface of the device. Responsive to the detection, a search is performed of a local storage element to locate the selected media. If located, as indicated by the block 244, the stored media is retrieved. The stored media comprises a portion of the entirety of the selected media. The media is played out, and a determination is made, indicated by the block 248, as to whether an additional portion of the selected media is to be played out. If so, a request is made, indicated at the block 252, to retrieve, from a network location, an additional portion of the selected media. The request is generated and sent. Then, and as indicated by the block 256, the delivery of the additional portion of the media is detected and played out. The process ends at the end block 262.

Because broadcast techniques are used to send first portions of selected media, the media is sent in a bandwidth-efficient manner. If more than the portion of the selected media is desired to be played out, the additional portion of the media is retrieved responsive to request. As, oftentimes, only a portion of popular media is actually elected to be viewed by a viewer, bandwidth efficiencies result.

The previous descriptions are of preferred examples for implementing the invention, and the scope of the invention should not necessarily be limited by this description. The scope of the present invention is defined by the following claims.

## Claims

1. An apparatus for a wireless device having media-broadcast reception functionality from a broadcaster (32), media-delivery functionality from a network (12), and local cache memory (72) for storing portions of video data files received via the media-broadcast reception functionality the portions of video files including an indication of a network location at which a remotely-located additional portion of the selected video data file from the network is accessible, said apparatus comprising:
a selection detector (92) configured to detect selection to play out a selected video data file;
a media retriever (94) adapted to receive indication of the selection detected by said selection detector, said media retriever configured to retrieve a media-broadcast-received, locally-cached portion of the selected video data file from the local cache memory and configured to receive the indication of a network location and initiate retrieval, upon request, of the remotely-located additional portion of the selected video data file from the network; and
a determiner (96) configured to determine whether the remotely located additional portion of the video data file is to be retrieved and to responsively request retrieval of the remotely located additional portion of the video data file.

2. The apparatus of claim 1 wherein said media retriever is further configured to retrieve a network location association identifier from the locally-cached portion of the selected video data file.

3. The apparatus of claim 2 wherein said media retriever is further configured to retrieve remotely located additional portion of the selected video data file from the network at the network location association identifier.

4. The apparatus of claim 2 wherein said media retriever is configured to retrieve a locally-cached portion of selected video data file associated with the selected uniform resource locator.

5. The apparatus of claim 2 wherein said media retriever is configured to initiate retrieval of a remotely-located additional portion of the selected video data file by initiating access to the selected uniform resource locator.

6. A method for facilitating communication of a selected video data file, said method comprising:
broadcasting (154) a plurality of portions of video data files including a first portion of the selected video data file together with an indication of a network location at which a second portion of the video data file is accessible;
providing the a second portion of the selected video data file for access from a network by way of the network location indicated by the indication broadcast together with the first portion of the selected video data file.

7. The method of claim 6 further comprising selecting the selected video data file.

8. The method of claim 7 wherein said selecting comprises selecting a video data file identified to be popular according to a popularity indicia.

9. The method of claim 6 wherein said broadcasting comprises broadcasting less than an entirety of the selected video data file.

10. The method of claim 9 further comprising identifying a location of the selected video data file at which the first portion of the selected video data file terminates.

11. The method of claim 10 wherein the second portion of the selected video data file commences at the location at which the first portion of the selected video data file terminates.

12. The method of claim 9 further comprising detecting a request for the second portion of the selected video data file and wherein said providing further comprises sending the second portion of the selected video data file by a packet-switched communication connection.

13. A method for facilitating play out of media at a wireless device having media-broadcast reception functionality from a broadcaster (32), media-delivery functionality from a network (12), and local cache memory (72) for storing portions of video data files received via the media-broadcast reception functionality the portions of video files including an indication of a network location at which a remotely-located additional portion of the selected video data file from the network is accessible, said method comprising:
detecting (242) selection to play out a selected video data file;
retrieving (244) a locally-cached portion of the selected video data file;
receiving the indication of a network location at which the remotely-located additional portion of the selected video data file is accessible
determining (248) whether play out of the selected video data file is to continue beyond play out of the locally-cached portion; and
initiating (252) retrieval of the remotely-located additional portion of the selected video data file if play out of the selected video data file is to continue beyond play out of the locally-cached portion.

14. The method of claim 13 wherein said detecting comprises detecting selection to access a selected uniform resource locator.

15. An apparatus for facilitating broadcast of a selected video data file, said apparatus comprising:
a media portion selector (52) configured to split the selected video data file into at least a first portion of the selected video data file of a specified first size and a second portion of the selected video data file of a specified second size, said first and second portions split with an association between them; and
a broadcast instructor (56) configured to initiate broadcast of the [[a]] first portion of the selected video data file, together with an indication of a network location at which the second portion of the selected video data file is accessible.

## Patentansprüche

1. Gerät für eine Drahtlosvorrichtung mit Medienrundfunkempfangsfunktionalität von einem Rundfunkveranstalter (32), Medienzustellungsfunktionalität von einem Netz (12) und einem lokalen Cachespeicher (72) zum Speichern von Teilen von Videodatendateien, die über die Medienrundfunkempfangsfunktionalität empfangen werden, wobei die Teile von Videodateien eine Angabe eines Netzortes enthalten, an dem ein fern ansässiger zusätzlicher Teil der ausgewählten Videodatendatei von dem Netz zugänglich ist, wobei das Gerät Folgendes aufweist:
einen Auswahldetektor (92), der dazu konfiguriert ist, eine Auswahl zu erfassen, um eine ausgewählte Videodatendatei abzuspielen,
eine Medienabrufeinrichtung (94), die dazu ausgelegt ist, eine Angabe der Auswahl zu empfangen, die von dem Auswahldetektor erfasst ist, wobei die Medienabrufeinrichtung dazu konfiguriert ist, einen über Medienrundfunk empfangenen, lokal in dem Cachespeicher aufgenommenen Teil der ausgewählten Videodatendatei von dem lokalen Cachespeicher abzurufen, und dazu konfiguriert ist, die Angabe eines Netzortes zu empfangen und auf Anfrage ein Abrufen des fern ansässigen zusätzlichen Teil der ausgewählten Videodatendatei von dem Netz einzuleiten, und
eine Bestimmungseinrichtung (96), die dazu konfiguriert ist, zu bestimmen, ob der fern ansässige zusätzliche Teil der Videodatendatei abgerufen werden soll, und darauf reagierend einen Abruf des fern ansässigen zusätzlichen Teils der Videodatendatei anzufragen.

2. Gerät nach Anspruch 1, wobei die Medienabrufeinrichtung ferner dazu konfiguriert ist, einen Netzortverknüpfungsidentifikator von dem lokal in dem Cachespeicher aufgenommenen Teil der ausgewählten Videodatendatei abzurufen.

3. Gerät nach Anspruch 2, wobei die Medienabrufeinrichtung ferner dazu konfiguriert ist, einen fern ansässigen zusätzlichen Teil der ausgewählten Videodatendatei von dem Netz an dem Netzortverknüpfungsidentifikator abzurufen.

4. Gerät nach Anspruch 2, wobei die Medienabrufeinrichtung dazu konfiguriert ist, einen lokal in dem Cachespeicher aufgenommenen Teil der ausgewählten Videodatendatei abzurufen, der bzw. die mit dem ausgewählten Uniform Resource Locator verknüpft ist.

5. Gerät nach Anspruch 2, wobei die Medienabrufeinrichtung dazu konfiguriert ist, einen Abruf eines fern ansässigen zusätzlichen Teils der ausgewählten Videodatendatei durch Einleiten eines Zugriffs auf den ausgewählten Uniform Resource Locator einzuleiten.

6. Verfahren zum Vereinfachen von Kommunikation einer ausgewählten Videodatendatei, wobei das Verfahren Folgendes aufweist:
Ausstrahlen (154) einer Vielzahl von Teilen von Videodatendateien, die einen ersten Teil der ausgewählten Videodatendatei enthalten, zusammen mit einer Angabe eines Netzortes, an dem ein zweiter Teil der Videodatendatei zugänglich ist,
Bereitstellen eines zweiten Teils der ausgewählten Videodatendatei für Zugriff von einem Netz über den Netzort, der von der Angabe angegeben wird, die zusammen mit dem ersten Teil der ausgewählten Videodatendatei übermittelt worden ist.

7. Verfahren nach Anspruch 6, ferner mit Auswählen der ausgewählten Videodatendatei.

8. Verfahren nach Anspruch 7, wobei das Auswählen ein Auswählen einer Videodatendatei aufweist, die nach einer Popularitätsangabe als populär identifiziert ist.

9. Verfahren nach Anspruch 6, wobei das Ausstrahlen ein Ausstrahlen von weniger als einer Gesamtheit der ausgewählten Videodatendatei aufweist.

10. Verfahren nach Anspruch 9, ferner mit Identifizieren eines Ortes der ausgewählten Videodatendatei, an dem der erste Teil der ausgewählten Videodatendatei endet.

11. Verfahren nach Anspruch 10, wobei der zweite Teil der ausgewählten Videodatendatei an dem Ort anfängt, an dem der erste Teil der ausgewählten Videodatendatei endet.

12. Verfahren nach Anspruch 9, ferner mit Erfassen einer Anfrage für den zweiten Teil der ausgewählten Videodatendatei, wobei das Bereitstellen ferner ein Senden des zweiten Teils der ausgewählten Videodatendatei durch eine paketvermittelte Kommunikationsverbindung aufweist.

13. Verfahren zum Vereinfachen eines Abspielens von Medien an einer Drahtlosvorrichung mit Medienrundfunkempfangsfunktionalität von einem Rundfunkveranstalter (32), einer Medienzustellungsfunktionalität von einem Netz (12) und einem lokalen Cachespeicher (72) zum Speichern von Teilen von Videodatendateien, die über die Medienrundfunkempfangsfunktionalität empfangen werden, wobei die Teile von Videodateien eine Angabe eines Netzortes enthalten, an dem ein fern ansässiger zusätzlicher Teil der ausgewählten Videodatendatei von dem Netz zugänglich ist, wobei das Verfahren Folgendes aufweist:
Erfassen (242) einer Auswahl, um eine ausgewählte Videodatendatei abzuspielen,
Abrufen (244) eines lokal in dem Cachespeicher gespeicherten Teils der ausgewählten Videodatendatei,
Empfangen der Angabe eines Netzortes, an dem der fern ansässige zusätzliche Teil der ausgewählten Videodatendatei zugänglich ist, und
Bestimmen (248), ob ein Abspielen der ausgewählten Videodatendatei jenseits eines Abspielens des lokal in dem Cachespeicher gespeicherten Teils andauern soll, und
Einleiten (252) eines Abrufens des fern ansässigen zusätzlichen Teils der ausgewählten Videodatendatei, wenn das Abspielen der ausgewählten Videodatendatei jenseits des Abspielens des lokal in dem Cachespeicher gespeicherten Teils andauern soll.

14. Verfahren nach Anspruch 13, wobei das Erfassen ein Erfassen einer Auswahl aufweist, um auf einen ausgewählten Uniform Resource Locator zuzugreifen.

15. Gerät zum Vereinfachen eines Ausstrahlens einer ausgewählten Videodatendatei, wobei das Gerät Folgendes aufweist:
eine Medienteilauswahleinrichtung (52), die dazu konfiguriert ist, die ausgewählte Videodatendatei in mindestens einen ersten Teil der ausgewählten Videodatendatei einer festgelegten ersten Größe und einen zweiten Teil der ausgewählten Videodatendatei einer festgelegten zweiten Größe zu teilen, wobei der erste und der zweite Teil mit einer Verknüpfung zwischen ihnen geteilt sind, und
eine Rundfunkanweisungseinrichtung (56), die dazu konfiguriert ist, ein Ausstrahlen des ersten Teils der ausgewählten Videodatendatei zusammen mit einer Angabe eines Netzortes einzuleiten, an dem der zweite Teil der ausgewählten Videodatendatei zugänglich ist.

## Revendications

1. Appareil pour dispositif sans fil ayant une fonctionnalité de réception de diffusion de supports à partir d'un diffuseur (32), une fonctionnalité de fourniture de supports depuis un réseau (12), et une antémémoire locale (72) pour stocker des parties de fichiers de données vidéo reçues par le biais de la fonctionnalité de réception de diffusion de supports, les parties de fichiers vidéo comprenant une indication d'un emplacement réseau auquel est accessible une partie supplémentaire, située à distance, du fichier de données vidéo sélectionné à partir du réseau, ledit appareil comprenant :
un détecteur de sélection (92) configuré pour détecter une sélection pour lire un fichier de données vidéo sélectionné ;
un extracteur de supports (94) apte à recevoir indication de la sélection détectée par ledit détecteur de sélection, ledit extracteur de supports étant configuré pour extraire une partie mise en antémémoire localement, de support de diffusion reçu, du fichier de données vidéo sélectionné en provenance de l'antémémoire locale et configuré pour recevoir l'indication d'un emplacement réseau et déclencher, sur demande, l'extraction de la partie supplémentaire, située à distance, du fichier de données vidéo sélectionné à partir du réseau ; et
un outil de détermination (96) configuré pour déterminer si la partie supplémentaire, située à distance, du fichier de données vidéo doit être extraite et, en réaction, demander l'extraction de la partie supplémentaire, située à distance, du fichier de données vidéo.

2. Appareil selon la revendication 1, dans lequel ledit extracteur de supports est, en outre, configuré pour extraire un identificateur d'association d'emplacement réseau de la partie mise en antémémoire localement du fichier de données vidéo sélectionné.

3. Appareil selon la revendication 2, dans lequel ledit extracteur de supports est, en outre, configuré pour extraire la partie supplémentaire, située à distance, du fichier de données vidéo sélectionné du réseau au niveau de l'identificateur d'association d'emplacement réseau.

4. Appareil selon la revendication 2, dans lequel ledit extracteur de supports est configuré pour extraire une partie mise en antémémoire localement du fichier de données vidéo sélectionné associée à l'identifiant de ressource universel sélectionné.

5. Appareil selon la revendication 2, dans lequel ledit extracteur de supports est configuré pour déclencher l'extraction d'une partie supplémentaire, située à distance, du fichier de données vidéo sélectionné en établissant l'accès à l'identifiant de ressource universel sélectionné.

6. Procédé pour faciliter la communication d'un fichier de données vidéo sélectionné, ledit procédé comprenant les étapes consistant à :
diffuser (154) une pluralité de parties de fichiers de données vidéo comprenant une première partie du fichier de données vidéo sélectionné conjointement à une indication d'un emplacement réseau auquel est accessible une seconde partie du fichier de données vidéo ;
fournir la seconde partie du fichier de données vidéo sélectionné pour accès depuis un réseau au moyen de l'emplacement réseau indiqué par l'indication diffusée conjointement à la première partie du fichier de données vidéo sélectionné.

7. Procédé selon la revendication 6, comprenant, en outre, la sélection du fichier de données vidéo sélectionné.

8. Procédé selon la revendication 7, dans lequel ladite sélection comprend la sélection d'un fichier de données vidéo identifié comme étant populaire d'après un indice de popularité.

9. Procédé selon la revendication 6, dans lequel ladite diffusion comprend une diffusion inférieure à une intégralité du fichier de données vidéo sélectionné.

10. Procédé selon la revendication 9, comprenant, en outre, l'identification d'un emplacement du fichier de données vidéo sélectionné auquel se termine la première partie du fichier de données vidéo sélectionné.

11. Procédé selon la revendication 10, dans lequel la seconde partie du fichier de données vidéo sélectionné commence à l'emplacement auquel se termine la première partie du fichier de données vidéo sélectionné.

12. Procédé selon la revendication 9, comprenant, en outre, la détection d'une demande pour la seconde partie du fichier de données vidéo sélectionné et dans lequel ladite fourniture comprend, en outre, l'envoi de la seconde partie du fichier de données vidéo sélectionné par une connexion de communication par commutation de paquets.

13. Procédé pour faciliter la lecture de supports au niveau d'un dispositif sans fil ayant une fonctionnalité de réception de diffusion de supports à partir d'un diffuseur (32), une fonctionnalité de fourniture de supports depuis un réseau (12), et une antémémoire locale (72) pour stocker des parties de fichiers de données vidéo reçues par le biais de la fonctionnalité de réception diffusion de supports, les parties de fichiers vidéo comprenant une indication d'un emplacement réseau auquel est accessible une partie supplémentaire, située à distance, du fichier de données vidéo sélectionné à partir du réseau, ledit procédé comprenant les étapes consistant à :
détecter (242) une sélection pour lire un fichier de données vidéo sélectionné ;
extraire (244) une partie mise en antémémoire localement du fichier de données vidéo sélectionné ;
recevoir l'indication d'un emplacement réseau auquel est accessible une partie supplémentaire, située à distance, du fichier de données vidéo sélectionné ;
déterminer (248) si la lecture du fichier de données vidéo sélectionné doit être poursuivie au-delà de la lecture de la partie mise en antémémoire localement ; et
déclencher (252) l'extraction de la partie supplémentaire, située à distance, du fichier de données vidéo sélectionné si la lecture du fichier de données vidéo sélectionné doit être poursuivie au-delà de la lecture de la partie mise en antémémoire localement.

14. Procédé selon la revendication 13, dans lequel ladite détection comprend la détection de la sélection pour avoir accès à un identifiant de ressource universel sélectionné.

15. Appareil pour faciliter la diffusion d'un fichier de données vidéo sélectionné, ledit appareil comprenant :
un sélecteur de parties de supports (52) configuré pour diviser le fichier de données vidéo sélectionné en au moins une première partie du fichier de données vidéo sélectionné d'une première taille spécifiée et une seconde partie du fichier de données vidéo sélectionné d'une seconde taille spécifiée, lesdites première et seconde parties étant divisées avec une association entre elles ; et
un instructeur de diffusion (56) configuré pour déclencher la diffusion de la première partie du fichier de données vidéo sélectionné, conjointement à une indication d'un emplacement réseau auquel est accessible la seconde partie du fichier de données vidéo sélectionné.
